# EUROPEAN PATENT SPECIFICATION

(11) **EP 2 628 638 B1**
(45) Date of publication and mention of the grant of the patent: **11.08.2021**
(21) Application number: 13155528.6
(22) Date of filing: 15.02.2013
(51) Int. Cl.: B60Q 1/26

(54) **Automotive body element comprising a light source on its inner face**
Automobiles Körperelement, umfassend eine Lichtquelle auf der inneren Fläche
Élément de carrosserie d'automobile comprenant une source de lumière sur sa face interne

(30) Priority: 17.02.2012 DE 102012003083; 18.01.2013 EP 13151850
(43) Date of publication of application: 21.08.2013
(73) Proprietor: Flex-N-Gate France, 25405 Audincourt (FR); Faurecia Exteriors GmbH, 31655 Stadthagen (DE)
(72) Inventor: Micollier, Aude, 25400 Audincourt (FR); Benboudjema, Chawki, 25200 Montbeliard (FR); Imbert, Didier, 70200 Froideterre (FR); Bois, Frédéric, 67100 Strasbourg (FR); Bücker, Dirk, D-91871Weissenburg in Bayern (DE); Görse, Hergen, 91154 Roth (DE); Berkau, Reinhold, 89547 Heldenfingen (DE); Gukkenberger, Michael, 91785 Pleinfeld (DE); Hemery, Cécile, 90400 Trevenans (FR)
(74) Representative: Andrieux, Benoît

(56) References cited:
- EP-A2- 1 344 688
- US-A1- 2009 257 241
- US-A1- 2011 249 458
- None

## Description

The present invention relates to an automotive body element comprising a translucent body having an outer face, intended to be turned towards outside the vehicle, and an inner face, intended to be turned towards inside the vehicle, at least one of said faces being coated by a coating layer made of opaque material.

The invention also relates to a method for producing such a body element.

In order to improve the appearance of an automotive vehicle, it is known to provide luminous elements arranged to illuminate the body of the vehicle. These luminous elements are for example formed by light guides arranged along air inlets of the vehicle, for example around an air inlet grid, or forming a logo or along the door openings, etc. The light sources of such luminous elements are arranged in openings provided in body elements or between adjacent body elements and are directly visible from the outside of the vehicle.

Therefore, the appearance of the vehicle is improved when the light sources are turned on, but these light sources remain visible from outside the vehicle when they are turned off, which negatively impacts on the appearance of the vehicle.

The same issue may arise with functional light sources, such as stop lights or other lights.

It is also known to perform multistep processes for the manufacture of decorative rods, such as chromed ornamental strips of automotive bumpers. Such processes generally involve the injection-moulding of a substrate, followed by galvanisation of the substrate in several chemical baths.

A further known process consists of film-insert moulding. A coated film is trimmed, formed and then injection-moulded. The resulting product is opaque.

The known chroming of body components leads to a chrome layer thickness incompatible with backlighting applications. Backlighting is only possible by intentionally destroying the visible surface.

One of the goals of the invention is to overcome the above-mentioned drawbacks by proposing a body element having an outer face which can be illuminated without the light source being visible from outside of the vehicle when it is turned off.

To this end, the invention relates to an automotive vehicle body element according to claim 1.

Document US 2009/257241 A1 disclose a similar vehicle body element.

According to some aspects of the invention, the light source is hidden by the body element and is therefore not directly visible from outside the vehicle. Furthermore, the additional coating layer prevents natural light from reaching the light source, when said light source is turned off. Consequently, the appearance of the vehicle is not negatively impacted when the light source is turned off and is improved when it is turned on.

According to other features of the body element:
- the additional coating layer extends continuously on the outer face side of the body and has no opening;
- the light source is formed by a light guide extending on the inner face of the body, a light emitting element being connected to at least one of the extreme part of said light guide;
- the body element comprises a translucent varnish layer extending on the additional coating layer.

The invention also relates to a method for producing a body element as described above, the method comprising the steps of claim 6.

Other aspects and advantages of the invention will appear upon reading the following description, given by way of example and made in reference to the appended drawings, wherein :
- Fig. 1 is a diagrammatical perspective and partially cross-section view of part of a body element according to an example that does not form part of the invention,
- Fig. 2 is a diagrammatical perspective and partially cross-section view of part of a body element according to the invention,
- Fig. 3 is a diagrammatical front view of the body element according to figures 1 and 2, when the light source is turned off (on the left) and when it is turned on (on the right),
- Fig. 4 is a diagrammatical cross-section view of the different steps of the method for producing a body element according to the the example of figure 1, and
- Fig. 5 is a diagrammatical cross-section view of the different steps of the method for producing a body element according to the invention.

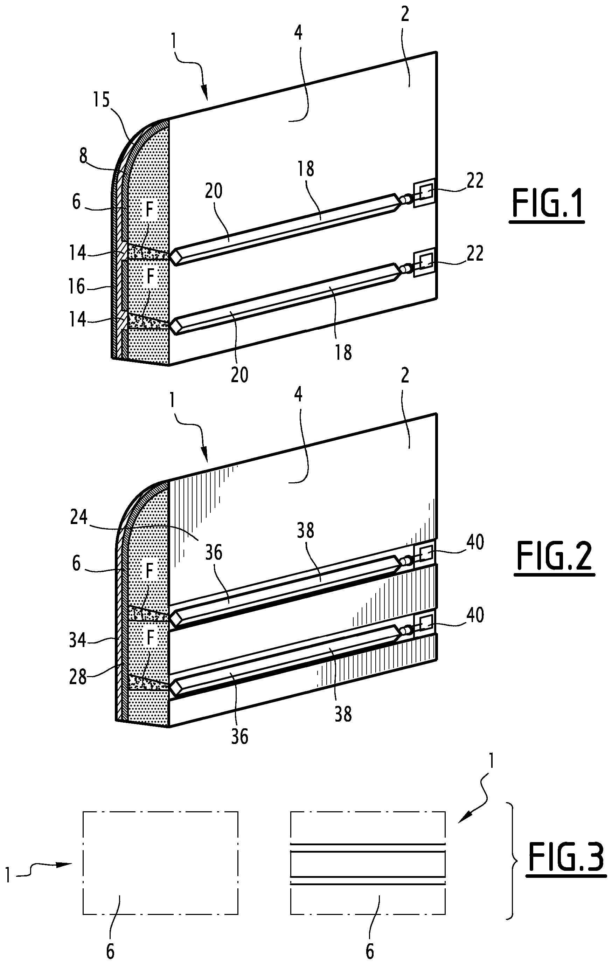

Referring to Figs. 1 and 2, an automotive vehicle body element 1 will be described. By body element, it is meant any element intended to extend toward the outside of the vehicle, such as a trim element, a decoration element of the decorative cover, medallion, decorative rod or air inlet grid type or other.

The body element 1 comprises a body 2 defining the shape and the thickness of the body element. Therefore, in the case of a rod for example, the body 2 will be substantially of parallelepipedic and elongated shape. Thus, the shape and thickness of the body 2 depend on the type of body element 1 it is intended to form and can vary from one body element 1 to another.

The body 2 comprises an inner face 4, intended to be turned towards the inside of the automotive vehicle, and an outer face 6, intended to be turned towards the outside of the vehicle, i.e. to extend outside the vehicle and to be visible from the outside of the vehicle.

The body 2 is made in a translucent or transparent material, i.e. a material allowing light to pass from the inner face 4 to the outer face 6 and vice-versa. The body 2 is for example made of one or more translucent or transparent thermoplastic materials, such as acrylonitrile butadiene styrene (ABS), polycarbonate (PC), ABS-PC, polymethyl methacrylate (PMMA), polypropylene (PP) or other or a mix of these materials.

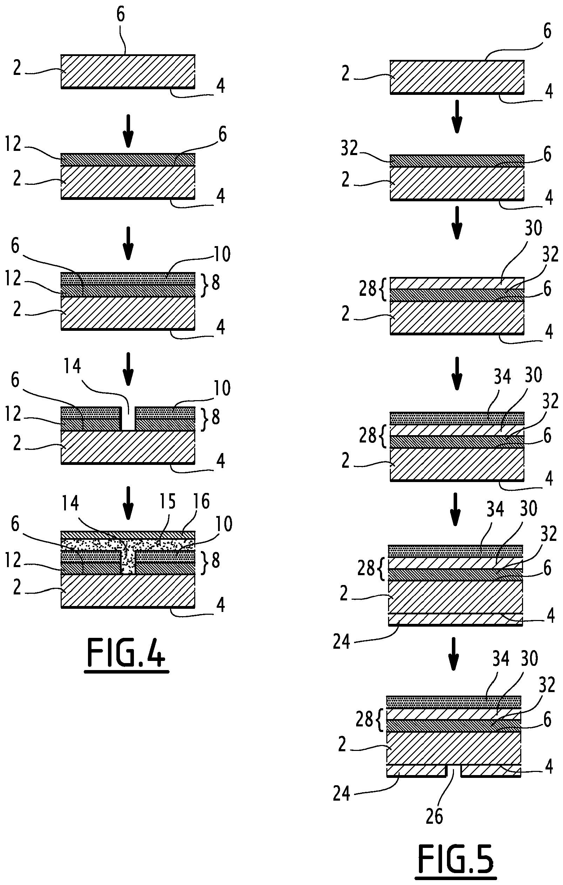

Referring to Figs. 1 and 4, it will now be described a first embodiment of the invention.

In the example of figure 1, the outer face 6 of the body 2 is coated by an at least partially opaque coating layer 8, i.e. not letting the light coming from the body pass towards the outside of the body element, or coming from the outside of the body element pass towards the body 2. The coating layer 8 covers the entire outer face 6 of the body 2.

The coating layer 8 comprises at least a paint or chrome layer 10.

The coating layer 8 may further comprise a primer layer 12, improving in a known way the adhesion of the paint or chrome layer 10 on the body. The primer layer 12 is arranged directly on the outer face 6 of the body 2 and the paint or chrome layer extends on the primer layer 12 opposite the outer face 6 of the body 2, as shown in Fig. 4.

The coating layer 8 comprises at least one opening 14 passing through said coating layer 8, i.e. passing through the paint or chrome layer and, if needed, the primer layer 12. On the side of the outer face 6 of the body 2, the opening 14 is closed by the body 2. Therefore, the light passing through the body 2 can be diffused towards the outside of the body element 1 through the opening 14. As way of example, the opening 14 has a width comprised between 1 micrometer and a few millimetres.

The opening 14 can have any desired shape in order to create a pattern on the outer face of the body element 1 as will be described later. Several distinct openings 14 can be provided to create the pattern, as shown in Fig. 1.

An additional coating layer 15 is arranged on the coating layer 8 and fills the opening 14. The additional layer 15 has no opening and is substantially uniform all over the coating layer 8. The additional coating layer 15 gives its outer aspect to the body element 1. The outer face of the additional layer 15 is reflective such that light coming from the outside of the vehicle does not pass through the additional coating layer 15 into the coating layer 8. Therefore, the opening 14 and the body 2 are not visible from outside the body element 1. The thickness of the additional coating layer 15 is arranged to let the light coming from a light source arranged on the inner face 4 of the body 2 pass through the additional coating layer 15 towards outside the body element when the light source is turned on, as will be described later, whereas light coming from outside does not make the elements extending on the inner face 4 of the body visible as explained previously.

Consequently, from outside the body element 1, an observer only sees the uniform additional coating layer 15 and does not perceive the presence of elements behind the body 2 or the presence of the pattern designed by the opening(s) 14, when the body element 1 is illuminated by natural light. For this observer, the body element 1 has therefore a uniform aspect when illuminated with light coming from outside the vehicle. The additional coating layer 15 for example comprises at least one paint or chrome layer and has a thickness for example comprised between 1 micrometer and 100 micrometers.

It should be noted that the additional coating layer 15 protects the opening 14 from being filled by small elements or objects, such as dust.

A varnish layer 16 is arranged on the additional coating layer 15. The varnish layer 16 is substantially transparent or translucent such that the additional coating layer 15 remains visible from outside the body element 1.

At least one light source 18 is arranged on the inner face 4 of the body 2. The light source 18 if for example formed by at least one light guide 20, for example of the optic fibre type, and by at least one light emitting element 22, for example of the light-emitting diode, connected to at least one of the extreme part of the light guide 20, as shown in Fig. 1. The light guide 20 is arranged to emit light coming from the light source towards the outer face 6 of the body 2, as shown by ray F in Fig. 1. The light guide 20 is for example glued to inner face 4 of the body 2 or welded thereto and extends along a path defining a pattern to be lighted on the outer face 6 of the body element 1. The light emitting element 22 and its powering electronics can also be attached to the inner face 4 of the body 2.

The pattern can have any desired shape, from a simple straight line, as shown in Fig. 3, or a curve or a logo or else. Several light sources 18 can be provided to create the pattern.

The opening(s) 14 made in the coating layer 8 are provided opposite the light source(s) 18 and follow for example the pattern defined by the light guide 20. According to an embodiment, several openings can be provided opposite one light guide 20 with areas of coating layer 8 between these openings, in order to form interrupted lines from a single light guide 20. The openings thereby form a mask enabling to define the pattern to be lighted on the outer face of the body element 1 when the light source 18 is turned on.

Consequently, when the light source 18 is turned on, the light emitted through the body 2 to the outer face 6 is emitted towards the outside of the body element through the opening(s) 14 and through the additional coating layer 15, which gives a particular aspect to the automotive vehicle.

Referring to Fig. 4, the method for producing the body element 1 according to figure 1 will now be described.

A body 2 made of translucent or transparent material having the desired shape of the body element is first provided. Preferably, the body 2 is obtained by injection-moulding.

The body 2 is coated on its outer face 6 by a primer layer 12 which eases the applying of the paint or chrome layer 10 on the body 2. The paint or chrome layer 10 is applied all over the primer layer 12 in a conventional known way, in order to form the coating layer 8. Preferably, the paint or chrome layer 10 is applied by physical vapour deposition or sputtering.

The opening(s) 14 is then realized in the coating layer 8. The opening(s) 14 is for example made by laser or chemical etching of the coating layer or by any other suitable method from outside the outer face of the coating layer 8 opposite the outer face 6 of the body 2.

The additional coating layer 15 is then applied all over the coating layer 8 such as to cover it and to fill the opening(s) 14.

The varnish layer 16 is then applied all over the additional coating layer 15 in order to protect it from the outer environment.

The light source(s) 18 is then attached, for example by gluing or else, to the inner face 4 of the body opposite the opening(s) 14. The light source(s) 18 can also be attached to the body before or during one of the steps described previously.

Referring to Figs. 2 and 5, an embodiment of the invention will now be described.

In the embodiment, the inner face 4 of the body 2 is coated with a coating layer 24.

The coating layer 24 comprises at least an opaque layer made of an opaque material, for example paint or chrome, preventing light from passing through.

According to one embodiment, the coating layer 24 further comprises a primer layer, between the inner face of the body 2 and the layer made of opaque material, improving the adhesion of the opaque layer on the body 2.

According to one embodiment, the opaque layer may be coated with one or both of a "hardcoat" and an opaque varnish.

At least one opening 26 is provided in the coating layer 24 through said coating layer to the inner face 4 of the body 2. On the inner face 4 side of the body 2, the opening 26 is closed by the body 2. As way of example, the opening 26 has a width comprised between 1 micrometer and a few millimetres.

The opening 26 can have any desired shape in order to create a pattern on the outer face of the body element 1 as will be described later. Several distinct openings 26 can be provided to create the pattern, as shown in Fig. 3.

An additional coating layer 28 is arranged on the outer face 6 of the body, opposite the inner face 4, and covers the outer face 6.

The additional coating layer 28 comprises at least one paint or chrome layer 30, giving its outer aspect to the body element 1.

According to an embodiment, the coating layer 28 further comprises primer layer 32, improving in a known way the adhesion of the paint or chrome layer 30 on the body. The primer layer 32 is arranged directly on the outer face 6 of the body 2 and the paint or chrome layer 30 extends on the primer layer 32 opposite the outer face 6 of the body 2, as shown in Fig. 5.

The outer face of the additional coating layer 28 is reflective such that light coming from the outside of the vehicle does not pass through the additional coating layer 28 into the body 2. Therefore, the body 2, the coating layer 24 and the opening 26 are not visible from outside the body element 1. The thickness of the additional coating layer 28 is arranged to let the light coming from a light source arranged on the inner face 4 of the body 2 pass through the additional coating layer 28 towards outside the body element when the light source is turned on, as will be described later, whereas light coming from outside does not make the elements extending on the inner face 4 of the body visible as explained previously.

Consequently, from outside the body element 1, an observer only sees the uniform additional coating layer 28 and does not perceive the presence of elements behind the body 2 or the presence of the pattern designed by the opening(s) 26, when the body element 1 is illuminated by natural light. For this observer, the body element 1 has therefore a uniform aspect when illuminated with light coming from outside the vehicle. The additional coating layer 28 has a thickness for example comprised between 1 micrometer and 100 micrometers.

A varnish layer 34 is arranged on the additional coating layer 28. This varnish layer 34 is transparent or translucent such that the additional coating layer 28 remains visible from outside the body element 1. The varnish layer 34 protects the additional coating layer 28 from the outer environment.

At least one light source 36 is arranged on the inner face 4 of the body 2. The light source 36 if for example formed by at least one light guide 38, for example of the optic fibre type, and by at least one light emitting element 40, for example of the light-emitting diode, connected to at least one of the extreme part of the light guide 38, as shown in Fig. 2. The light guide 38 is arranged to emit light coming from the light source towards the outer face 6 of the body 2, as shown by ray F' in Fig. 2. The light guide 38 is for example glued to inner face 4 of the body 2 or welded thereto and extends along a path defining a pattern to be lighted on the outer face 6 of the body element 1. The light emitting element 40 and its powering electronics can also be attached to the inner face 4 of the body 2.

The pattern can have any desired shape, from a simple straight line, as shown in Fig. 3, or a curve or a logo or else. Several light sources 36 can be provided to create the pattern.

The light source 36 is arranged in the opening 26 of the coating layer 24, in order to inject the light directly into the body 2. The opening 26 enables to form a guide for positioning the light source 36 on the inner face 4 and to define the pattern to be lighted. According to an embodiment, areas of coating layer 24 can be left opposite the light source 36 in order to form interrupted lines from a single light guide 38 The openings thereby form a mask enabling to define the pattern to be lighted on the outer face of the body element 1 when the light source 36 is turned on.

Referring to Fig. 5, the method for producing the body element 1 according to the second embodiment will now be described.

A body 2 made of translucent or transparent material having the desired shape of the body element is first provided. Preferably, the body 2 is obtained by injection-moulding.

The body 2 is coated on its outer face 6 by a primer layer 32 which eases the applying of the paint or chrome layer 30 on the body 2. The paint or chrome layer 30 is applied all over the primer layer 12 in a conventional known way, in order to form the additional coating layer 28. Preferably, the paint or chrome layer 30 is applied by physical vapour deposition (PVD) or sputtering. A varnish layer 34 is then applied on the additional coating layer 28.

The inner face 4 of the body 2 is then coated by the coating layer 24, preferably involving physical vapour deposition or sputtering. The opening(s) 26 are then provided in the coating layer 24. The opening(s) 26 is for example made by laser or chemical etching of the coating layer or by any other suitable method.

The light source(s) 36 are then attached, for example by gluing or else, on the inner face 4 of the body 2 in the opening(s) 26.

The body element 1 according to the example and the invention described above allows to provide lightings on the face of an automotive vehicle without the light sources being visible when these light sources are turned off, as shown on the left body element 1 of Fig. 3. When the light sources are turned on, the lighting appears on the outer face of the body element 1, as shown on the right body element of Fig. 3.

The various layers arranged on the body can be applied on said body via a PVD process and the chrome layer can be applied by a galvanization process in several chemical baths.

A body element 1 having an improved appearance and offering a greater liberty in the arrangement of the lightings is thereby obtained. The lighting can be a decorative lighting, for example when the body element forms an air inlet grid or a medallion forming a logo, or a functional lighting, for example when the body element extends in the area provided for breaking lights.

## Claims

1. Automotive vehicle body element (1), comprising a translucent body (2) having an outer face (6), intended to be turned towards outside the vehicle, and an inner face (4), intended to be turned towards inside the vehicle, said inner face (4) being coated by a coating layer (24) made of opaque material, wherein said coating layer (24) comprises at least one opening (26), said element further comprising at least one light source (36) extending on the inner face (4) of the body (2) opposite the opening (26), an additional coating layer (28) made of opaque material being arranged on the body element on the outer face (6) side of the translucent body at least opposite the opening (26), said additional coating layer (28) being arranged to let the light coming from the light source (36) pass through said additional coating layer (28), when the light source is turned on, and to prevent natural light to pass through the additional coating layer (28) when the light source (36) is turned off, and wherein the additional coating layer (28) is a paint or chrome layer having a reflective outer face, **characterized in that** the light source (36) is arranged in the opening (26) of the coating layer (24).

2. Body element according to claim 1, wherein the additional coating layer (28) extends continuously on the outer face (6) side of the body (2) and has no opening.

3. Body element according to claim 1 or 2, wherein the coating layer (24) comprises a paint or chrome layer (30).

4. Body element according to any one of claims 1 to 3, wherein the light source (36) is formed by a light guide (38) extending on the inner face (4) of the body (2), a light emitting element (40) being connected to at least one of the extreme part of said light guide (38).

5. Body element according to any one of claims 1 to 4, further comprising a translucent varnish layer (34) extending on the additional coating layer (28).

6. Method for producing a body element (1) according to any one of claims 1 to 5, said method comprising the following steps :
- providing a body (2) made of translucent material,
- coating the inner face (4) of said body (2) by a coating layer (24) made of opaque material,
- providing an opening (26) in the coating layer (24),
- attaching a light source (36) on the inner face (4) of the body (2),
- providing an additional coating layer (28) made of opaque material arranged on the body element on the outer face (6) side of the body at least opposite the opening (26), said additional coating layer (28) being arranged to let the light coming from the light source (36) pass through said additional coating layer (28), when the light source is turned, on and to prevent natural light to pass through the additional coating layer (28) when the light source (36) is turned off, said additional coating layer (28) being a paint or chrome layer having a reflective outer face, said method being **characterized in that** it further comprises the following step:
- arranging the light source (36) in the opening (26) of the coating layer (24).

## Patentansprüche

1. Automobiles Körperelement (1), umfassend einen lichtdurchlässigen Körper (2) mit einer Außenfläche (6), die dazu bestimmt ist, der Außenseite des Fahrzeugs zugewandt zu sein, und einer Innenfläche (4), die dazu bestimmt ist, der Innenseite des Fahrzeugs zugewandt zu sein, wobei die Innenfläche (4) mit einer Beschichtungsschicht (24) aus undurchsichtigem Material beschichtet ist, wobei die Beschichtungsschicht (24) mindestens eine Öffnung (26) umfasst, wobei die Beschichtungsschicht (24) mindestens eine Öffnung (26) aufweist, wobei das Element ferner mindestens eine Lichtquelle (36) aufweist, die sich auf der Innenfläche (4) des Körpers (2) gegenüber der Öffnung (26) erstreckt, wobei eine zusätzliche Beschichtungsschicht (28) aus lichtundurchlässigem Material auf dem Körperelement auf der Seite der Außenfläche (6) des lichtdurchlässigen Körpers mindestens gegenüber der Öffnung (26) angeordnet ist, wobei die zusätzliche Beschichtungsschicht (28) so angeordnet ist, dass sie das von der Lichtquelle (36) kommende Licht durch die zusätzliche Beschichtungsschicht (28) hindurchlässt, wenn die Lichtquelle eingeschaltet ist, und dass sie verhindert, dass natürliches Licht durch die zusätzliche Beschichtungsschicht (28) hindurchläuft, wenn die Lichtquelle (36) ausgeschaltet ist, und wobei die zusätzliche Beschichtungsschicht (28) eine Farb- oder Chromschicht mit einer reflektierenden Außenfläche ist, **dadurch gekennzeichnet, dass** die Lichtquelle (36) in der Öffnung (26) der Beschichtungsschicht (24) angeordnet ist.

2. Körperelement nach Anspruch 1, wobei die zusätzliche Beschichtungsschicht (28) auf der Seite der Außenfläche (6) des Körpers (2) durchgehend verläuft und keine Öffnung aufweist.

3. Körperelement nach Anspruch 1 oder 2, wobei die Beschichtungsschicht (24) eine Lack- oder Chromschicht (30) umfasst.

4. Körperelement nach einem der Ansprüche 1 bis 3, wobei die Lichtquelle (36) durch einen Lichtleiter (38) gebildet wird, der sich auf der Innenfläche (4) des Körpers (2) erstreckt, wobei ein lichtemittierendes Element (40) mit mindestens einem der äußersten Teile des Lichtleiters (38) verbunden ist.

5. Körperelement nach einem der Ansprüche 1 bis 4, ferner umfassend eine lichtdurchlässige Lackschicht (34), die sich auf der zusätzlichen Beschichtungsschicht (28) erstreckt.

6. Verfahren zur Herstellung eines Körperelements (1) nach einem der Ansprüche 1 bis 5, wobei das Verfahren die folgenden Schritte umfasst:
- Bereitstellen eines Körpers (2) aus lichtdurchlässigem Material,
- Beschichten der Innenfläche (4) des Körpers (2) mit einer Beschichtungsschicht (24) aus lichtundurchlässigem Material,
- Vorsehen einer Öffnung (26) in der Beschichtungsschicht (24),
- Anbringen einer Lichtquelle (36) auf der Innenfläche (4) des Körpers (2),
- Vorsehen einer zusätzlichen Beschichtungsschicht (28) aus lichtundurchlässigem Material, die auf dem Körperelement auf der Seite der Außenfläche (6) des Körpers zumindest gegenüber der Öffnung (26) angeordnet ist, wobei die zusätzliche Beschichtungsschicht (28) angeordnet ist, um das von der Lichtquelle (36) kommende Licht durch die zusätzliche Beschichtungsschicht (28) hindurchzulassen, wenn die Lichtquelle eingeschaltet ist, und um zu verhindern, dass natürliches Licht durch die zusätzliche Beschichtungsschicht (28) hindurchgeht, wenn die Lichtquelle (36) ausgeschaltet ist, wobei die zusätzliche Beschichtungsschicht (28) eine Farb- oder Chromschicht mit einer reflektierenden Außenfläche ist,
wobei das Verfahren **dadurch gekennzeichnet ist, dass** es ferner den folgenden Schritt umfasst:
- Anordnen der Lichtquelle (36) in der Öffnung (26) der Beschichtungsschicht (24).

## Revendications

1. Elément de carrosserie de véhicule automobile (1), comprenant un corps translucide (2) présentant une face externe (6), destinée à être tournée vers l'extérieur du véhicule, et une face interne (4), destinée à être tournée vers l'intérieur du véhicule, ladite face interne (4) étant revêtue d'une couche de revêtement (24) en matériau opaque, dans lequel ladite couche de revêtement (24) comprend au moins une ouverture (26), ledit élément comprenant en outre au moins une source de lumière (36) s'étendant sur la face interne (4) du corps (2) à l'opposé de l'ouverture (26), une couche de revêtement supplémentaire (28) en matériau opaque étant disposée sur l'élément de carrosserie du côté de la face externe (6) du corps translucide au moins à l'opposé de l'ouverture (26), ladite couche de revêtement supplémentaire (28) étant agencée pour laisser passer la lumière provenant de la source de lumière (36) à travers ladite couche de revêtement supplémentaire (28), lorsque la source de lumière est allumée, et pour empêcher la lumière naturelle de traverser la couche de revêtement supplémentaire (28) lorsque la source de lumière (36) est éteinte, et dans lequel la couche de revêtement supplémentaire (28) est une couche de peinture ou de chrome ayant une face extérieure réfléchissante, **caractérisé en ce que** la source de lumière (36) est disposée dans l'ouverture (26) de la couche de revêtement (24).

2. Elément de carrosserie selon la revendication 1, dans lequel la couche de revêtement supplémentaire (28) s'étend de manière continue sur la face externe (6) du corps (2) et ne présente aucune ouverture.

3. Elément de carrosserie selon la revendication 1 ou 2, dans lequel la couche de revêtement (24) comprend une couche de peinture ou de chrome (30).

4. Elément de carrosserie selon l'une quelconque des revendications 1 à 3, dans lequel la source de lumière (36) est formée par un guide de lumière (38) s'étendant sur la face interne (4) du corps (2), un élément émetteur de lumière (40) étant connecté à au moins une des parties d'extrémité dudit guide de lumière (38).

5. Elément de carrosserie selon l'une quelconque des revendications 1 à 4, comprenant en outre une couche de vernis translucide (34) s'étendant sur la couche de revêtement supplémentaire (28).

6. Procédé de fabrication d'un élément de carrosserie (1) selon l'une quelconque des revendications 1 à 5, ledit procédé comprenant les étapes suivantes :
- fournir un corps (2) en matériau translucide,
- revêtir la face interne (4) dudit corps (2) par une couche de revêtement (24) en matériau opaque,
- ménager une ouverture (26) dans la couche de revêtement (24),
- fixer une source de lumière (36) sur la face interne (4) du corps (2),
- fournir une couche de revêtement supplémentaire (28) en matériau opaque disposée sur l'élément de corps sur la face externe (6) du côté du corps au moins à l'opposé de l'ouverture (26), ladite couche de revêtement supplémentaire (28) étant agencée pour laisser la lumière provenant de la source de lumière (36) traverser ladite couche de revêtement supplémentaire (28), lorsque la source de lumière est allumée, et pour empêcher la lumière naturelle de traverser la couche de revêtement supplémentaire (28) lorsque la source de lumière (36) est éteinte, ladite couche de revêtement supplémentaire (28) étant une couche de peinture ou de chrome ayant une face externe réfléchissante,
ledit procédé étant **caractérisé en ce qu'**il comprend en outre l'étape suivante :
- disposer la source de lumière (36) dans l'ouverture (26) de la couche de revêtement (24).
